(19) 

Europäisches
Patentamt
European
Patent Office
Office européen
des brevets

(11) **EP 3 739 972 A1**

(12) **EUROPEAN PATENT APPLICATION**
published in accordance with Art. 153(4) EPC

(43) Date of publication:
**18.11.2020 Bulletin 2020/47**

(21) Application number: **19747612.0**

(22) Date of filing: **28.01.2019**

(51) Int Cl.:
**H04W 52/36** (2009.01)

(86) International application number:
**PCT/CN2019/073325**

(87) International publication number:
**WO 2019/149161 (08.08.2019 Gazette 2019/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.02.2018 CN 201810103897**

(71) Applicant: HUAWEI TECHNOLOGIES CO., LTD.
Shenzhen, Guangdong 518129 (CN)

(72) Inventors:
• **CHAI, Xiaomeng**
Shenzhen, Guangdong 518129 (CN)
• **WANG, Lei**
Shenzhen, Guangdong 518129 (CN)
• **XU, Xiuqiang**
Shenzhen, Guangdong 518129 (CN)
• **CHEN, Yan**
Shenzhen, Guangdong 518129 (CN)

(74) Representative: **Körber, Martin Hans**
**Mitscherlich PartmbB**
**Patent- und Rechtsanwälte**
**Sonnenstrasse 33**
**80331 München (DE)**

(54) **POWER CONTROL METHOD, RELATED APPARATUS AND PRODUCT**

(57) Embodiments of this application disclose a power control method, a related apparatus, and a product, so that a receive end can normally receive a signal. The method in the embodiments of this application includes: determining, by UE, an initial transmit power of a first-type PUSCH; determining, by the UE, that an actual transmit power of the first-type PUSCH in a time period in which a second-type PUSCH is not transmitted and that is in a transmission time unit of the first-type PUSCH is a first power, where a length of the transmission time unit of the first-type PUSCH is greater than a length of a transmission time unit of the second-type PUSCH; and the first power is greater than or equal to the initial transmit power and is less than or equal to a maximum power used by the UE to transmit a PUSCH; and determining, by the UE, that an actual transmit power of the first-type PUSCH in a time period that is used to transmit the second-type PUSCH and that is in the transmission time unit of the first-type PUSCH is a second power, and a sum of the second power and a transmit power that is of the second-type PUSCH is less than or equal to the maximum power used by the UE to transmit the PUSCH.

| UE determines an initial transmit power of an eMBB service | 301 |

↓

| The UE determines that an actual transmit power of the eMBB service in a time period in which a URLLC service is not transmitted and that is in a transmission time unit of the eMBB service is a first power | 302 |

↓

| The UE determines that an actual transmit power of the eMBB service in a time period that is used to transmit the URLLC service and that is in the transmission time unit of the eMBB service is a second power | 303 |

FIG. 3

**Description**

This application claims priority to Chinese Patent Application No. 201810103897.9, filed with the Chinese Patent Office on February 1, 2018 and entitled "POWER CONTROL METHOD, RELATED APPARATUS, AND PRODUCT", which is incorporated herein by reference in its entirety.

**TECHNICAL FIELD**

This application relates to the communications field, and in particular, to a power control method, a related apparatus, and a product.

**BACKGROUND**

Future 5G wireless communication mainly includes three application scenarios: enhanced mobile broadband (enhanced mobile broadband, eMBB), ultra-reliable and low-latency communications (ultra-reliable and low-latency communications, URLLC), and massive machine-type communications (massive machine-type communications, mMTC), and a non-orthogonal multiple access (non-orthogonal multiple access, NOMA) technology in a 5G wireless communications system allows a plurality of pieces of user data to be transmitted on a same time-frequency resource.

For same user equipment (user equipment, UE), when the UE transmits a physical uplink shared channel (physical uplink shared channel, PUSCH), there may be both a first-type PUSCH and a first-type PUSCH on a same time-frequency resource. Respective transmit powers are separately calculated for the two types of PUSCHs according to power control formulas in a standard and based on power control parameters of the two types of PUSCHs, and the respective transmit powers of the two types of PUSCHs do not exceed a maximum transmit power used by the UE to transmit the PUSCH.

However, when the UE needs to simultaneously transmit the two types of PUSCHs, a current total transmit power of the UE may exceed the maximum transmit power used by the UE to transmit the PUSCH. Consequently, normal signal receiving of a receive end is affected.

**SUMMARY**

Embodiments of this application provide a power control method, a related apparatus, and a product, so that a receive end can normally receive a signal.

In view of this, a first aspect of the embodiments of this application provides a power control method, including:

determining, by UE, an initial transmit power of a first-type PUSCH, where the first-type PUSCH may be used to transmit a service that has a low priority and a relatively low latency requirement, for example, an eMBB service, and the initial transmit power of the first-type PUSCH may be calculated according to a formula specified in the 3GPP TS 38.213 standard;

when a second-type PUSCH needs to be transmitted in a transmission time unit of the first-type PUSCH, determining, by the UE, that an actual transmit power of the first-type PUSCH in a time period in which the second-type PUSCH is not transmitted and that is in the transmission time unit of the first-type PUSCH is a first power, where the second-type PUSCH may be used to transmit a service that has a high priority and a relatively high latency requirement, for example, a URLLC service, a length of the transmission time unit of the first-type PUSCH is greater than a length of a transmission time unit of the second-type PUSCH, in other words, the second-type PUSCH is not always simultaneously transmitted in the transmission time unit of the first-type PUSCH, the first power in this case is an actual transmit power of the first-type PUSCH when the first-type PUSCH and the second-type PUSCH are not simultaneously transmitted in a same time period, and the first power needs to be greater than or equal to the initial transmit power and less than or equal to a maximum power used by the UE to transmit a PUSCH; and

when the second-type PUSCH needs to be transmitted in the transmission time unit of the first-type PUSCH, determining, by the UE, that an actual transmit power of the first-type PUSCH in a time period that is used to transmit the second-type PUSCH and that is in the transmission time unit of the first-type PUSCH is a second power, where the second power in this case is an actual transmit power of the first-type PUSCH when the first-type PUSCH and the second-type PUSCH are simultaneously transmitted in a same time period, the second power is greater than or equal to 0, a sum of the second power and a transmit power that is of the second-type PUSCH is less than or equal to the maximum power used by the UE to transmit the PUSCH, and the transmit power that is of the second-type PUSCH may be calculated according to a formula specified in the 3GPP TS 38.213 standard.

In the embodiments of this application, in the transmission time unit of the first-type PUSCH, regardless of the time period in which only the first-type PUSCH is transmitted or the time period in which the first-type PUSCH and the second-type PUSCH are simultaneously transmitted, a total transmit power of the UE does not exceed the maximum power used by the UE to transmit the PUSCH, so that a receive end can normally receive a signal.

With reference to the first aspect of the embodiments of this application, in a first implementation of the first aspect of the embodiments of this application, the first power is equal to the sum of the second power and the transmit power that is of the second-type PUSCH.

According to the solution provided in the embodiments of this application, regardless of when the first-type PUSCH and the second-type PUSCH are not simultaneously transmitted in the same time period, or when the first-type PUSCH and the second-type PUSCH are simultaneously transmitted in the same time period, the total transmit power of the UE is the same. To be specific, a power used when the UE performs transmission in the transmission time unit of the first-type PUSCH remains constant, and for some UEs that do not support a jump in a transmit power in one transmission time unit, it is ensured that the UE can normally transmit a service.

With reference to the first aspect of the embodiments of this application, in a second implementation of the first aspect of the embodiments of this application, a difference between the first power and the sum of the second power and the transmit power that is of the second-type PUSCH is less than or equal to a preset difference.

With reference to the second implementation of the first aspect of the embodiments of this application, in a third implementation of the first aspect of the embodiments of this application, the preset difference is a maximum value, supported by the UE, of a difference between any two non-zero transmit powers in a same transmission time unit.

According to the solution provided in the embodiments of this application, when the first-type PUSCH and the second-type PUSCH are not simultaneously transmitted in the same time period, or the first-type PUSCH and the second-type PUSCH are simultaneously transmitted in the same time period, the UE allows the total transmit power to unnecessarily always remain constant. In other words, the transmit power of the UE in each of the two time periods only needs to ensure that a change does not exceed the preset difference, thereby improving implementability of the solution.

With reference to the first aspect of the embodiments of this application, in a fourth implementation of the first aspect of the embodiments of this application, the first power is equal to the initial transmit power.

According to the solution provided in the embodiments of this application, when the initial transmit power of the first-type PUSCH is greater than the transmit power of the second-type PUSCH, the UE may set the first power to be equal to the initial transmit power. In this way, actually, when the first-type PUSCH and the second-type PUSCH are not simultaneously transmitted in the same time period, the initial transmit power may not be changed, and a transmit power of the first-type PUSCH does not need to be set again.

With reference to the first aspect of the embodiments of this application, in a fifth implementation of the first aspect of the embodiments of this application, the first power is greater than or equal to the transmit power of the second-type PUSCH.

According to the solution provided in the embodiments of this application, when the initial transmit power of the first-type PUSCH is less than the transmit power of the second-type PUSCH, the UE may set the first power to be greater than or equal to the transmit power of the second-type PUSCH. In this way, when the first-type PUSCH and the second-type PUSCH are simultaneously transmitted in the same time period, a power obtained by subtracting the transmit power of the second-type PUSCH from the first power may be used as the second power, so that a power used when the UE performs transmission in the transmission time unit of the first-type PUSCH may remain constant.

With reference to the first aspect of the embodiments of this application, the first implementation of the first aspect of the embodiments of this application, the second implementation of the first aspect of the embodiments of this application, the third implementation of the first aspect of the embodiments of this application, the fourth implementation of the first aspect of the embodiments of this application, or the fifth implementation of the first aspect of the embodiments of this application, in a sixth implementation of the first aspect of the embodiments of this application, the first power is equal to the initial transmit power multiplied by a first coefficient, and the second power is equal to the initial transmit power multiplied by a second coefficient.

According to the solution provided in the embodiments of this application, the initial power is separately multiplied by different coefficients to obtain the first power and the second power, and the first coefficient may be greater than the second coefficient. In this way, it can be ensured that the first power is equal to the sum of the second power and the transmit power that is of the second-type PUSCH, or the difference between the first power and the sum of the second power and the transmit power that is of the second-type PUSCH is less than or equal to the preset difference, so that a power used when the UE performs transmission in the transmission time unit of the first-type PUSCH may remain relatively constant.

With reference to the first aspect of the embodiments of this application, the first implementation of the first aspect of the embodiments of this application, the second implementation of the first aspect of the embodiments of this application, the third implementation of the first aspect of the embodiments of this application, the fourth implementation of the first aspect of the embodiments of this application, or the fifth implementation of the first aspect of the embodiments of this application, in a seventh implementation of the first aspect of the embodiments of this application, the UE sends capability information of the UE to a network device, where the capability information is used to indicate whether the UE supports a plurality of transmit powers in the same transmission time unit.

With reference to the seventh implementation of the first aspect of the embodiments of this application, in an eighth implementation of the first aspect of the embodiments of this application, after the UE sends the capability information of the UE to the network device, the UE receives power calculation mode information sent by the network device, where the power calculation mode information is used to determine a method for determining the first power and the second power.

According to the solution provided in the embodiments of this application, the network device may determine the power calculation mode information based on the capability information of the UE, and feed back the power calculation mode information to the UE. In other words, the network device may notify the UE of the method for determining the first power and the second power, thereby improving flexibility of the solution.

A second aspect of the embodiments of this application provides UE, including:

a first determining unit, configured to determine an initial transmit power of a first-type physical uplink shared channel PUSCH;

a second determining unit, configured to: when a second-type PUSCH needs to be transmitted in a transmission time unit of the first-type PUSCH, determine that an actual transmit power of the first-type PUSCH in a time period in which the second-type PUSCH is not transmitted and that is in the transmission time unit of the first-type PUSCH is a first power, where a length of the transmission time unit of the first-type PUSCH is greater than a length of a transmission time unit of the second-type PUSCH, and the first power is greater than or equal to the initial transmit power and less than or equal to a maximum power used by the UE to transmit a PUSCH; and

a third determining unit, configured to: when the second-type PUSCH needs to be transmitted in the transmission time unit of the first-type PUSCH, determine that an actual transmit power of the first-type PUSCH in a time period that is used to transmit the second-type PUSCH and that is in the transmission time unit of the first-type PUSCH is a second power, where the second power is greater than or equal to 0, and a sum of the second power and a transmit power that is of the second-type PUSCH is less than or equal to the maximum power used by the UE to transmit the PUSCH.

With reference to the second aspect of the embodiments of this application, in a first implementation of the second aspect of the embodiments of this application, the first power is equal to the sum of the second power and the transmit power that is of the second-type PUSCH.

With reference to the second aspect of the embodiments of this application, in a second implementation of the second aspect of the embodiments of this application, a difference between the first power and the sum of the second power and the transmit power that is of the second-type PUSCH is less than or equal to a preset difference.

With reference to the second implementation of the second aspect of the embodiments of this application, in a third implementation of the second aspect of the embodiments of this application, the preset difference is a maximum value, supported by the UE, of a difference between any two non-zero transmit powers in a same transmission time unit.

With reference to the second aspect of the embodiments of this application, in a fourth implementation of the second aspect of the embodiments of this application, the first power is equal to the initial transmit power.

With reference to the second aspect of the embodiments of this application, in a fifth implementation of the second aspect of the embodiments of this application, the first power is equal to the transmit power of the second-type PUSCH.

With reference to the second aspect of the embodiments of this application, the first implementation of the second aspect of the embodiments of this application, the second implementation of the second aspect of the embodiments of this application, the third implementation of the second aspect of the embodiments of this application, the fourth implementation of the second aspect of the embodiments of this application, or the fifth implementation of the second aspect of the embodiments of this application, in a sixth implementation of the second aspect of the embodiments of this application, the first power is equal to the initial transmit power multiplied by a first coefficient, and the second power is equal to the initial transmit power multiplied by a second coefficient.

With reference to the second aspect of the embodiments of this application, the first implementation of the second aspect of the embodiments of this application, the second implementation of the second aspect of the embodiments of this application, the third implementation of the second aspect of the embodiments of this application, the fourth implementation of the second aspect of the embodiments of this application, or the fifth implementation of the second aspect of the embodiments of this application, in a seventh implementation of the second aspect of the embodiments of this application, the UE further includes:

a sending unit, configured to send capability information of the UE to a network device, where the capability information is used to indicate whether the UE supports a plurality of transmit powers in the same transmission time unit.

With reference to the seventh implementation of the second aspect of the embodiments of this application, in an eighth implementation of the second aspect of the embodiments of this application, the UE further includes: a receiving unit, configured to receive power calculation mode information sent by the network device, where the power calculation mode information is used to determine a method for determining the first power and the second power.

A third aspect of the embodiments of this application provides UE, including:

a processor, a bus, and an input/output interface, where
the processor performs the following operations:

determining an initial transmit power of a first-type PUSCH;
when a second-type PUSCH needs to be transmitted in a transmission time unit of the first-type PUSCH, determining that an actual transmit power of the first-type PUSCH in a time period in which the second-type PUSCH is not transmitted and that is in the transmission time unit of the first-type PUSCH is a first power, where a length of the transmission time unit of the first-type PUSCH is greater than a length of a transmission time unit of the second-type PUSCH, and the first power is greater than or equal to the initial transmit power and less than or equal to a maximum power used by the UE to transmit a PUSCH; and
when the second-type PUSCH needs to be transmitted in the transmission time unit of the first-type PUSCH, determining that an actual transmit power of the first-type PUSCH in a time period that is used to transmit the second-type PUSCH and that is in the transmission time unit of the first-type PUSCH is a second power, where the second power is greater than or equal to 0, and a sum of the second power and a transmit power that is of the second-type PUSCH is less than or equal to the maximum power used by the UE to transmit the PUSCH.

A fourth aspect of the embodiments of this application provides a chip. The chip is configured to support UE in implementing a function in the first aspect, for example, sending or processing data and/or information in the foregoing method. The chip is specifically used in a chip system, and the chip system may include a chip, or may include a chip and another discrete device.

A fifth aspect of the embodiments of this application provides a computer-readable storage medium, including an instruction. When the instruction is run on a computer, the computer is enabled to perform a procedure in the power control method according to the first aspect.

A sixth aspect of the embodiments of this application provides a computer program product including an instruction. When the computer program product is run on a computer, the computer is enabled to perform a procedure in the power control method according to the first aspect.

A seventh aspect of the embodiments of this application provides a chip. When a chip in UE implements the foregoing power control method, the chip includes a processing unit and a communications unit. The processing unit may be, for example, a processor, and the communications unit may be, for example, an input/output interface, a pin, or a circuit. The processing unit may perform all or some of the actions performed by the UE in the embodiment shown in the first aspect.

The processor mentioned in any of the foregoing designs may be a general-purpose central processing unit (CPU), a microprocessor, an application-specific integrated circuit (application-specific integrated circuit, ASIC), or one or more integrated circuits configured to control program execution of the wireless communication method according to the first aspect.

It can be learned from the foregoing technical solutions that the embodiments of this application have the following advantages.

The UE determines the initial transmit power of the first-type PUSCH. When the second-type PUSCH needs to be transmitted in the transmission time unit of the first-type PUSCH, the UE determines that the actual transmit power of the first-type PUSCH in the time period in which the second-type PUSCH is not transmitted and that is in the transmission time unit of the first-type PUSCH is the first power, where the length of the transmission time unit of the first-type PUSCH is greater than the length of the transmission time unit of the second-type PUSCH, and the first power is greater than or equal to the initial transmit power and less than or equal to the maximum power used by the UE to transmit the PUSCH. When the second-type PUSCH needs to be transmitted in the transmission time unit of the first-type PUSCH, the UE determines that the actual transmit power of the first-type PUSCH in the time period that is used to transmit the second-type PUSCH and that is in the transmission time unit of the first-type PUSCH is the second power, where the second power is greater than or equal to 0, and the sum of the second power and the transmit power that is of the second-type PUSCH is less than or equal to the maximum power used by the UE to transmit the PUSCH. It can be learned that in the transmission time unit of the first-type PUSCH, regardless of the time period in which only the first-type PUSCH is transmitted or the time period in which the first-type PUSCH and the second-type PUSCH are simultaneously transmitted, the total transmit power of the UE does not exceed the maximum power used by the UE to transmit the PUSCH, so that the receive end can normally receive the signal.

**BRIEF DESCRIPTION OF DRAWINGS**

FIG. 1 is a system architectural diagram of a network environment according to this application;

FIG. 2 is a schematic diagram of a change trend of a total transmit power of UE in a transmission time unit of an eMBB service;

FIG. 3 is a schematic diagram of an embodiment of a power control method according to this application;

FIG. 4 is a schematic diagram of another change trend of a total transmit power of UE in a transmission time unit of an eMBB service;

FIG. 5 is a schematic diagram of another change trend of a total transmit power of UE in a transmission time unit of an eMBB service;

FIG. 6 is a schematic diagram of another change trend of a total transmit power of UE in a transmission time unit of an eMBB service;

FIG. 7 is a schematic diagram of another change trend of a total transmit power of UE in a transmission time unit of an eMBB service;

FIG. 8 is a schematic diagram of another embodiment of a power control method according to this application;

FIG. 9 is a schematic diagram of another embodiment of a power control method according to this application;

FIG. 10 is a schematic diagram of an embodiment of UE according to this application; and

FIG. 11 is a schematic structural diagram of UE according to this application.

**DESCRIPTION OF EMBODIMENTS**

Embodiments of this application provide a power control method, a related apparatus, and a product, so that a receive end can normally receive a signal.

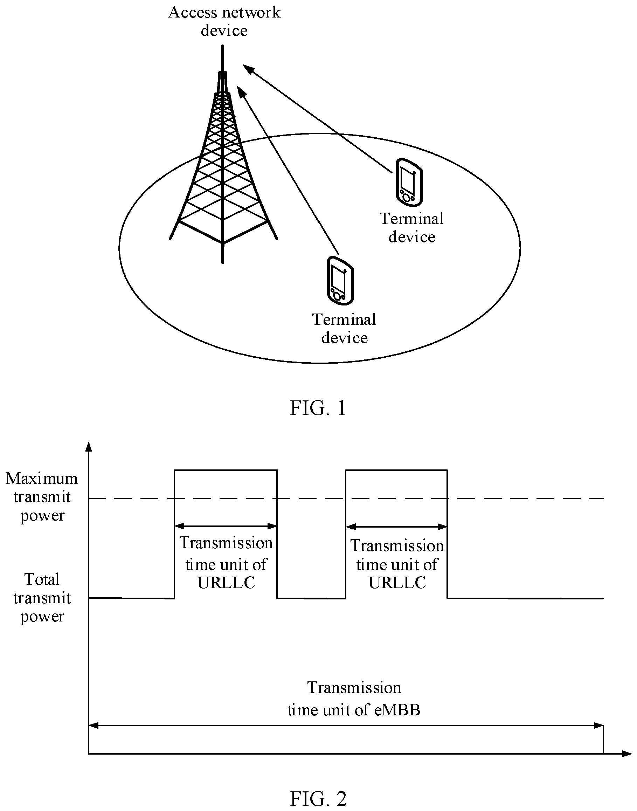

A system architecture or scenario to which this application is mainly applied is shown in FIG. 1, and includes an access network device and a terminal device. Each of the access network device and the terminal device may work on a licensed frequency band or a unlicensed frequency band. Regardless of the licensed frequency band or the unlicensed frequency band, one or more carriers may be included in this application. Carrier aggregation is performed on the licensed frequency band and an unlicensed frequency band, and may include: Carrier aggregation is performed on one or more carriers included in the licensed frequency band and one or more carriers included in the unlicensed frequency band.

The access network device may be an evolved NodeB (evolutional Node B, which may be eNB or e-NodeB for short), a macro base station, or a micro base station (also referred to as a "small cell"), a picocell base station, an access point (access point, AP), a transmission point (transmission point, TP) in a long term evolution (long term evolution, LTE) system or a licensed-assisted access using long term evolution (authorized auxiliary access long-term evolution, LAA-LTE) system, or a base station in a new radio (new radio, NR) system, for example, a new generation NodeB (new generation NodeB, gNodeB).

The terminal device may be referred to as user equipment (user equipment, UE), a mobile station (mobile station, MS), a mobile terminal (mobile terminal), a smart terminal, or the like. The terminal device may communicate with one or more core networks through a radio access network (radio access network, RAN). For example, the terminal device may be a mobile phone (or also referred to as a "cellular" phone), a computer having a mobile terminal, or the like. The terminal device may alternatively be a portable, pocket-size, handheld, computer-integrated or in-vehicle mobile apparatus, or a terminal device in a future NR network, which exchanges voice or data with the radio access network. Description of the terminal device: In this application, all devices that can perform data communication with a base station may be considered as terminal devices, and UE in a general sense is described in this application.

Future 5G wireless communication mainly includes three application scenarios: eMBB, URLLC, and mMTC. Transmission time units of different sizes are usually used to transmit a URLLC service and an eMBB service. For ease of understanding, in this application, a transmission time unit of a PUSCH for transmitting the URLLC service is referred to as a transmission time unit of the URLLC service for short, and a transmission time unit of a PUSCH for transmitting the eMBB service is referred to as a transmission time unit of the eMBB service for short. The transmission time unit of the URLLC service is usually less than the transmission time unit of the eMBB service. Due to different service features, power control parameters of the URLLC service and the eMBB service are usually independent of each other.

The UE may calculate, according to a formula specified in the 3GPP TS 38.213 standard, a transmit power used by the UE to transmit the PUSCH on a carrier of a serving cell, and the formula is as follows:

$$P_{\text{PUSCH},f,c}(i,j,q_d,l)$$

$$= \min \left\{ \begin{array}{l} P_{\text{CMAX},f,c}(i), \\ P_{\text{O\_PUSCH}f,c}(j) + 10\log_{10}(2^{\mu} \cdot M_{\text{RB},f,c}^{\text{PUSCH}}(i)) + \alpha_{f,c}(j) \cdot PL_{f,c}(q_d) + \Delta_{\text{TF},f,c}(i) + f_{f,c}(i,l) \end{array} \right\},$$

where

c represents the serving cell, f represents the carrier, i represents a number of a transmission time unit of the PUSCH, j represents a used parameter configuration set, and j is an index or a number of a parameter set (the parameter set includes at least one of the following parameters: $P_{\text{O\_PUSCH},f,c}(j)$ and $\alpha_{f,c}(j)$). Different values of j represent different parameter sets, and parameter sets corresponding to different types of PUSCHs (for example, a PUSCH that is based on dynamic scheduling and a PUSCH that is based on transmission without grant/grant-free transmission (transmission without grant/Grant-free transmission)) may correspond to the different values of j. $q_d$ represents a parameter for determining a reference signal used to calculate a path loss, and 1 represents a power control adjustment process index. $P_{\text{CMAX},f,c}(i)$ is a maximum transmit power configured for the UE in the transmission time unit on the carrier of the serving cell, $\mu$ is related to a used subcarrier spacing $\Delta f$, and $\mu = \log_2(\Delta f/15 \text{ kHz})$. $M_{\text{RB},f,c}^{\text{PUSCH}}(i)$ is a bandwidth allocated to the UE for transmitting the PUSCH, and is represented by using a resource block (Resource Block, RB). $P_{\text{O\_PUSCH},f,c}(j)$ represents a target power value expected by the PUSCH, and is configured by using higher layer signaling. $\alpha_{f,c}(j)$ represents a path loss compensation factor, and is configured by using higher layer signaling. $PL_{f,c}(q_d)$ represents a path loss estimated by using the reference signal indicated by the parameter $q_d$. $\Delta_{\text{TF},f,c}(i)$ represents a power offset corresponding to a modulation and coding scheme. $f_{f,c}(i,l)$ represents a closed-loop power control adjustment value. A unit of a power calculated by using the formula is dBm. In a possible implementation, the base station may deliver a message to the UE, to notify the UE of a specific parameter set used by the UE to calculate the transmit power of the PUSCH. For example, the base station notifies, by using a sounding reference signal (Sounding Reference Signal, SRS) resource indicator (SRS resource indicator, SRI) field in downlink control information, the UE of a specific parameter set used by the UE, that is, a value of j is determined by using content of the SRI field.

It may be understood that an SRI delivered by the base station to the UE may indicate different $P_{\text{O\_PUSCH},f,c}(j)$ and $\alpha_{f,c}(j)$. Therefore, different parameter sets may be used to separately calculate transmit powers of the URLLC service and the eMBB service. In other words, respective transmit powers are separately calculated for the two services according to power control formulas in the standard and based on the power control parameters of the two services. In a possible implementation, the parameter set may be notified by the base station to the UE.

It may be understood that, respective transmit powers are separately calculated for two types of PUSCHs according to power control formulas in the standard and based on power control parameters of the two types of PUSCHs. In this case, the respective transmit powers of the two types of PUSCHs do not exceed the maximum transmit power used by the UE to transmit the PUSCH. However, when the UE needs to simultaneously transmit the two types of PUSCHs, a current total transmit power of the UE may exceed the maximum transmit power used by the UE to transmit the PUSCH. Specifically, as shown in FIG. 2, a horizontal coordinate represents time, and a vertical coordinate represents a power. For example, the two types of PUSCHs are respectively an eMBB service and a URLLC service. A transmission time unit of the eMBB service needs to be greater than a transmission time unit of the URLLC service. No URLLC service is transmitted at the beginning of the transmission time unit of the eMBB service. In this case, a total transmit power of the UE is a transmit power of the eMBB service, and does not exceed the maximum transmit power of the UE. Subsequently, when the URLLC service is simultaneously transmitted in the transmission time unit of the eMBB service, a total transmit power of the UE is equal to the transmit power of the eMBB service plus a transmit power of the URLLC service, and may exceed the maximum transmit power of the UE. Consequently, normal signal receiving of a receive end is affected.

Therefore, an embodiment of this application provides a power control method to resolve the foregoing problem. For ease of understanding, the following describes a specific procedure in this embodiment of this application.

Specifically, in this embodiment of this application, an example in which a service transmitted on a first-type PUSCH is an eMBB service and a service transmitted on a second-type PUSCH is a URLLC service is used for description. In this case, it may be understood that a transmission time unit of the first-type PUSCH is a transmission time unit of the eMBB service, a transmission time unit of the second-type PUSCH is a transmission time unit of the URLLC service. Whether the eMBB service and the URLLC service overlap in frequency domain is not limited herein. In addition, the power control method provided in this embodiment of this application may be based on dynamic scheduling, or may be based on semi-persistent scheduling, or may be based on grant-free transmission. In addition, both open-loop power control and closed-loop power control are applicable to this embodiment of this application.

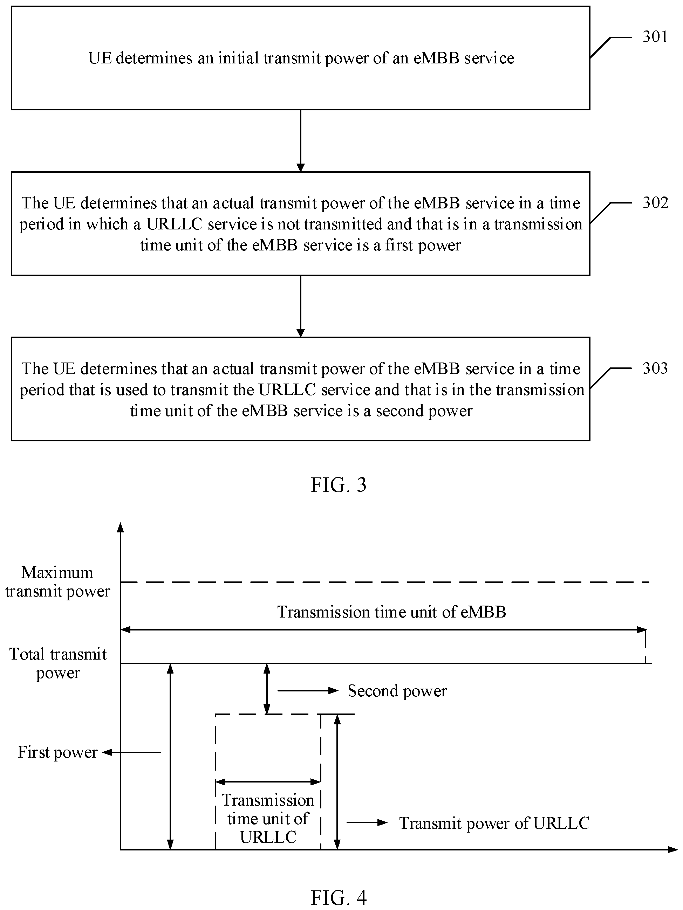

Referring to FIG. 3, an embodiment of the power control method in the embodiments of this application includes the following steps.

301: UE determines an initial transmit power of an eMBB service.

In this embodiment of this application, the UE may calculate an initial transmit power of a first-type PUSCH according to a formula specified in the 3GPP TS 38.213 standard. The initial transmit power may be shown in $\hat{P}_{eNMB,c}(i_2)$ = $\hat{P}_{PUSCH,f,c}(i,j,q_d,l)$, that is, a power that is used by the UE to transmit the eMBB service in a transmission time unit of the eMBB service and specified in the standard.

302: The UE determines that an actual transmit power of the eMBB service in a time period in which a URLLC service is not transmitted and that is in the transmission time unit of the eMBB service is a first power.

In this embodiment of this application, because a transmission time unit of the URLLC service is less than the transmission time unit of the eMBB service, when the URLLC service needs to be transmitted in the transmission time unit of the eMBB service, the transmission time unit of the eMBB service may be divided into two time periods, one time period is a time period in which only the eMBB service is transmitted, and the other time period is a time period in which the eMBB service and the URLLC service are simultaneously transmitted. In the time period in which only the eMBB service is transmitted, the UE determines that the actual transmit power of the current eMBB service is the first power, and the first power needs to be greater than or equal to the initial transmit power of the eMBB service and less than or equal to a maximum power used by the UE to transmit a PUSCH.

303: The UE determines that an actual transmit power of the eMBB service in the time period that is used to transmit the URLLC service and that is in the transmission time unit of the eMBB service is a second power.

In this embodiment of this application, in the time period in which the eMBB service and the URLLC service are simultaneously transmitted, the UE determines that the actual transmit power of the current eMBB service is the second power. A sum of the second power and a transmit power that is of the URLLC service needs to be less than or equal to the maximum power used by the UE to transmit the PUSCH, and the transmit power of the URLLC service may be shown in $\hat{P}_{urllc,c}(i_1)$ = $\hat{P}_{PUSCH,f,c}(i,j,q_d,l)$, that is, a power that is used by the UE to transmit the URLLC service in the transmission time unit of the URLLC service and specified in the standard.

It may be understood that in this embodiment of this application, the UE needs to ensure that the transmit power of the URLLC service remains unchanged in the transmission time unit of the eMBB service and only a transmit power of the eMBB service is adjusted.

In this embodiment of this application, in the transmission time unit of the eMBB service, regardless of the time period in which only the eMBB service is transmitted or the time period in which the eMBB service and the URLLC service are simultaneously transmitted, a total transmit power of the UE does not exceed the maximum power used by the UE to transmit the PUSCH, so that a receive end can normally receive a signal.

It should be noted that this embodiment of this application may be specifically implemented in a plurality of manners, which are separately described below.

Solution 1: The UE determines that the first power is equal to the sum of the second power and the transmit power that is of the URLLC service.

Specifically, the solution 1 may be further implemented in two manners, which are separately described below.

1. The initial transmit power of the eMBB service is separately multiplied by different coefficients to obtain the first power and the second power through calculation.

In this embodiment of this application, the initial transmit power $\hat{P}_{eMBB,c}(i_2)$ of the eMBB service and the transmit power $\hat{P}_{urllc,c}(i_1)$ of the URLLC service are first calculated according to the formulas in the standard. To ensure that the first power is equal to the sum of the second power and the transmit power that is of the URLLC service, the first power needs to be greater than or equal to the transmit power of the URLLC service. A first coefficient required for calculating the first power is first determined, and may be specifically shown in the following conditions:

$$\begin{cases} \dfrac{\hat{P}_{urllc,c}(i_1)}{\hat{P}_{eMBB,c}(i_2)} \le w(i_2) \le \dfrac{\hat{P}_{CMAX,f,c}(i_2)}{\hat{P}_{eMBB,c}(i_2)}, & \hat{P}_{eMBB,c}(i_2) < \hat{P}_{urllc,c}(i_1) \\ w(i_2) = 1, & \hat{P}_{eMBB,c}(i_2) \ge \hat{P}_{urllc,c}(i_1) \end{cases},$$

where $w(i_2)$ is the first coefficient for calculating the first power.

It can be learned that $w(i_2)$ may be determined in two cases. When the initial transmit power of the eMBB service is greater than or equal to the transmit power of the URLLC service, it is determined that $w(i_2) = 1$. To be specific, in this case, the first power is equal to the initial transmit power of the eMBB service. When the initial transmit power of the eMBB service is less than the transmit power of the URLLC service, the initial transmit power of the eMBB service needs to be amplified to obtain the first power, that is, in this case, $w(i_2) > 1$. In addition, there is a need to ensure that the first power is greater than or equal to the transmit power of the URLLC service.

That is, the first power needs to meet the following condition:

$$\hat{P}_{\text{urllc},c}(i_1) \leq w(i_2) \cdot \hat{P}_{\text{eMBB},c}(i_2) \leq \hat{P}_{CMAX,f,c}(i),$$

where $w(i_2) \cdot \hat{P}_{\text{eMBB},c}(i_2)$ is the first power.

The first power is calculated, and the second power may be obtained by subtracting the transmit power of the URLLC service from the first power.

That is, the second power needs to meet the following condition:

$$v(i_2) \cdot \hat{P}_{\text{eMBB},c}(i_2) + \hat{P}_{urllc,c}(i_1) = w(i_2) \cdot \hat{P}_{\text{eMBB},c}(i_2),$$

where $v(i_2) \cdot \hat{P}_{\text{eMBB},c}(i_2)$ is the second power; and then,

$$v(i_2) = w(i_2) - \frac{\hat{P}_{urllc,c}(i_1)}{\hat{P}_{eMBB,c}(i_2)},$$

where $v(i_2)$ is a second coefficient for calculating the second power.

The two coefficients $w(i_2)$ and $v(i_2)$ may be separately calculated in the foregoing manner.

2. The first power and the second power are determined by comparing the initial transmit power of the eMBB service with the transmit power of the URLLC service.

In this embodiment of this application, the initial transmit power $\hat{P}_{\text{eMBB},c}(i_2)$ of the eMBB service and the transmit power $\hat{P}_{\text{urllc},c}(i_1)$ of the URLLC service are first calculated according to the formulas in the standard, and then values of $\hat{P}_{\text{eMBB},c}(i_2)$ and $\hat{P}_{\text{urllc},c}(i_1)$ are compared. If $\hat{P}_{\text{eMBB},c}(i_2)$ is greater than or equal to $\hat{P}_{\text{urllc},c}(i_1)$, the first power is equal to $\hat{P}_{\text{eMBB},c}(i_2)$; or if $\hat{P}_{\text{eMBB},c}(i_2)$ is less than $\hat{P}_{\text{urllc},c}(i_1)$, the first power is equal to $\hat{P}_{\text{urllc},c}(i_1)$.

Further, when $\hat{P}_{\text{eMBB},c}(i_2)$ is greater than or equal to $\hat{P}_{\text{urllc},c}(i_1)$, the second power is equal to the first power minus $\hat{P}_{\text{urllc},c}(i_1)$. When $\hat{P}_{\text{eMBB},c}(i_2)$ is less than $\hat{P}_{\text{urllc},c}(i_1)$, the second power is equal to 0, in other words, sending of the eMBB service is stopped.

For ease of understanding, referring to FIG. 4, a horizontal coordinate represents time, and a vertical coordinate represents a power. For example, two types of PUSCHs are respectively an eMBB service and a URLLC service. A transmission time unit of the eMBB service needs to be greater than a transmission time unit of the URLLC service. No URLLC service is transmitted at the beginning of the transmission time unit of the eMBB service. In this case, a total transmit power of the UE is the first power. It can be learned that the first power is greater than the transmit power of the URLLC and does not exceed the maximum transmit power of the UE. Subsequently, when the URLLC service is simultaneously transmitted in the transmission time unit of the eMBB service, a total transmit power of the UE is equal to the second power plus the transmit power of the URLLC service, and in this case, the total transmit power of the UE is still equal to the first power, in other words, the total transmit power of the UE remains constant in the transmission time unit of the eMBB service. For some UEs that do not support a jump in a transmit power in one transmission time unit, it is ensured that the UE can normally transmit a service and a phase of a received signal is continuous, so that demodulation performance of the receive end is not affected.

Solution 2: The UE determines that a difference between the first power and a sum of the second power and a transmit power that is of a second-type PUSCH is less than or equal to a preset difference, and the preset difference is a maximum value, supported by the UE, of a difference between any two non-zero transmit powers in a same transmission time unit.

Specifically, the solution 2 may be implemented in two manners, which are separately described below.

1. The initial transmit power of the eMBB service is separately multiplied by different coefficients to obtain the first power and the second power through calculation.

In this embodiment of this application, the initial transmit power $\hat{P}_{\text{eMBB},c}(i_2)$ of the eMBB service and the transmit power $\hat{P}_{\text{urllc},c}(i_1)$ of the URLLC service are first calculated according to the formulas in the standard, and the preset difference $P_{offset,\max}$ further needs to be determined. A first coefficient may be determined as shown in the following condition:

$$w(i_2) = \max\left\{ 1, \ \frac{\hat{P}_{urllc,c}(i_1) - \hat{P}_{offset,\max}}{\hat{P}_{eMBB,c}(i_2)} \right\},$$

where $w(i_2)$ is the first coefficient for calculating the first power.

It can be learned that $w(i_2)$ may be determined in two cases. When the initial transmit power of the eMBB service is greater than or equal to the transmit power of the URLLC service, it is determined that $w(i_2) = 1$. To be specific, in this case, the first power is equal to the initial transmit power of the eMBB service. When the initial transmit power of the eMBB service is less than the transmit power of the URLLC service, in this case, there is a need to ensure that a sum of the first power and the preset difference is greater than or equal to the transmit power of the URLLC service.

That is, the first power needs to meet the following condition:

$$\left(\hat{P}_{urllc,c}(i_1) - \hat{P}_{offset,\max}\right) \le w(i_2) \cdot \hat{P}_{eMBB,c}(i_2) \le \hat{P}_{CMAX,f,c}(i),$$

where $w(i_2) \cdot \hat{P}_{eMBB,c}(i_2)$ is the first power.

The first power is calculated, and then the second power may be calculated based on the first power, the transmit power of the URLLC service, and the preset difference.

That is, the second power needs to meet the following condition:

$$\left| v(i_2) \cdot \hat{P}_{eMBB,c}(i_2) + \hat{P}_{urllc,c}(i_1) - w(i_2) \cdot \hat{P}_{eMBB,c}(i_2) \right| \le \hat{P}_{offset,\max},$$

where $v(i_2) \cdot \hat{P}_{eMBB,c}(i_2)$ is the second power; and then,

$$v(i_2) = \max\left\{ 0, \ 1 - \frac{\hat{P}_{urllc,c}(i_1)}{\hat{P}_{eMBB,c}(i_2)} \right\},$$

where $v(i_2)$ is a second coefficient for calculating the second power. When the sum of the first power and the preset difference is equal to the transmit power of the URLLC service, $v(i_2)$ is equal to 0. That is, in this case, sending of the eMBB service is stopped.

2. The first power and the second power are determined by comparing the initial transmit power of the eMBB service with the transmit power of the URLLC service.

In this embodiment of this application, the initial transmit power $\hat{P}_{eMBB,c}(i_2)$ of the eMBB service and the transmit power $\hat{P}_{urllc,c}(i_1)$ of the URLLC service are first calculated according to the formulas in the standard, and then values of $\hat{P}_{eMBB,c}(i_2)$ and $\hat{P}_{urllc,c}(i_1)$ are compared. If $\hat{P}_{eMBB,c}(i_2)$ is greater than or equal to $\hat{P}_{urllc,c}(i_1)$, the first power is equal to $\hat{P}_{eMBB,c}(i_2)$; or if $\hat{P}_{eMBB,c}(i_2)$ is less than $\hat{P}_{urllc,c}(i_1)$, the first power is equal to the transmit power of the URLLC service minus the preset difference.

Further, when $\hat{P}_{eMBB,c}(i_2)$ is greater than or equal to $\hat{P}_{urllc,c}(i_1)$, the second power is equal to the first power minus a sum of the transmit power of the URLLC service and the preset difference. When $\hat{P}_{eMBB,c}(i_2)$ is less than $\hat{P}_{urllc,c}(i_1)$, the second power is equal to 0, in other words, sending of the eMBB service is stopped.

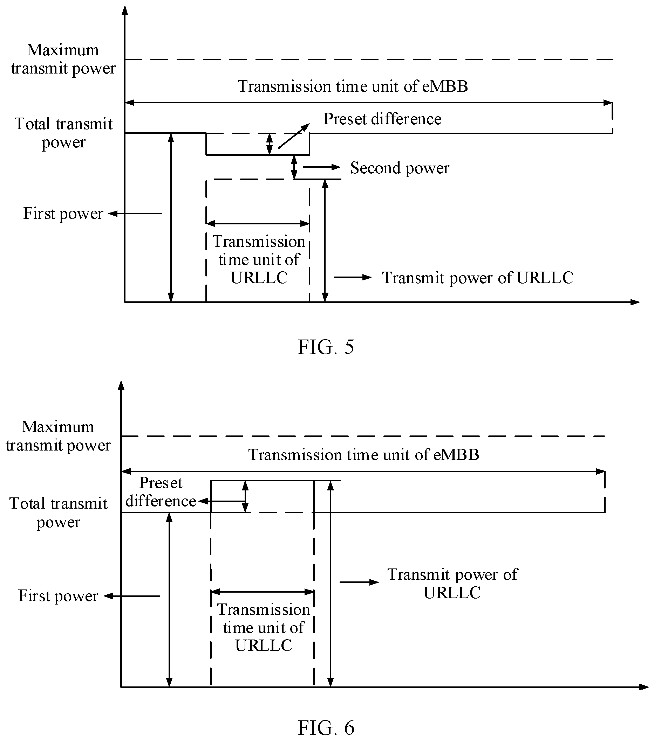

For ease of understanding, referring to FIG. 5, a horizontal coordinate represents time, and a vertical coordinate represents a power. For example, two types of PUSCHs are respectively an eMBB service and a URLLC service. A transmission time unit of the eMBB service needs to be greater than a transmission time unit of the URLLC service. No URLLC service is transmitted at the beginning of the transmission time unit of the eMBB service. In this case, a total transmit power of the UE is the first power. It can be learned that the first power is greater than the transmit power of the URLLC and does not exceed the maximum transmit power of the UE. Subsequently, when the URLLC service is simultaneously transmitted in the transmission time unit of the eMBB service, a total transmit power of the UE is equal to the second power plus the transmit power of the URLLC service, and the first power minus a sum of the second power and the transmit power that is of the URLLC service is equal to the preset difference.

Alternatively, as shown in FIG. 6, a horizontal coordinate represents time, and a vertical coordinate represents a power. For example, two types of PUSCHs are respectively an eMBB service and a URLLC service. A transmission time unit of the eMBB service needs to be greater than a transmission time unit of the URLLC service. No URLLC service is transmitted at the beginning of the transmission time unit of the eMBB service. In this case, a total transmit power of the UE is the first power. It can be learned that the first power is less than the transmit power of the URLLC, and the transmit power of the URLLC does not exceed the maximum transmit power of the UE. Subsequently, when the URLLC service is simultaneously transmitted in the transmission time unit of the eMBB service, a total transmit power of the UE is equal to the transmit power of the URLLC service, in other words, sending of the eMBB service is stopped, and the transmit power of the URLLC service minus the first power is equal to the preset difference.

In this embodiment of this application, in the transmission time unit of the eMBB service, regardless of a time period in which only the eMBB service is transmitted or a time period in which the eMBB service and the URLLC service are simultaneously transmitted, the UE allows the total transmit power to unnecessarily always remain constant. In other words, the transmit power of the UE in each of the two time periods only needs to ensure that a change does not exceed the preset difference, thereby improving implementability of the solution.

Solution 3: In the transmission time unit of the eMBB service, in a time period in which only the eMBB service is transmitted, the UE determines that the first power is equal to the initial transmit power of the eMBB service, and in a time period in which the eMBB service and the URLLC service are simultaneously transmitted, the UE determines that the sum of the second power and the transmit power that is of the URLLC service is less than or equal to the maximum power used by the UE to transmit the PUSCH.

Specifically, the solution 3 may be implemented in two manners, which are separately described below.

1. In the time period in which only the eMBB service is transmitted, the initial transmit power of the eMBB service remains unchanged, that is, the first power is equal to the initial transmit power of the eMBB service. In the time period in which the eMBB service and the URLLC service are simultaneously transmitted, the initial transmit power of the eMBB service is multiplied by a coefficient to obtain the second power, so that the sum of the second power and the transmit power that is of the URLLC service is less than or equal to the maximum power used by the UE to transmit the PUSCH.

In this embodiment of this application, the initial transmit power $\hat{P}_{\mathrm{eMBB},c}(i_2)$ of the eMBB service and the transmit power $\hat{P}_{\mathrm{urllc},c}(i_1)$ of the URLLC service are first calculated according to the formulas in the standard.

In the time period in which only the eMBB service is transmitted, the UE determines that the first power is equal to the initial transmit power of the eMBB service.

In the time period in which the eMBB service and the URLLC service are simultaneously transmitted, the second power needs to meet the following condition:

$$w(i_2)\cdot\hat{P}_{\mathrm{eMBB},c}(i_2)+\hat{P}_{urllcc}(i_1)\leq\hat{P}_{CMAX,f,c}(i)\,,$$

where $w(i_2)\cdot\hat{P}_{\mathrm{eMBB},c}(i_2)$ represents the second power, and $w(i_2)$ represents the coefficient.

2. In the time period in which only the eMBB service is transmitted, the initial transmit power of the eMBB service remains unchanged, that is, the first power is equal to the initial transmit power of the eMBB service. In the time period in which the eMBB service and the URLLC service are simultaneously transmitted, the second power is equal to the maximum power used by the UE to transmit the PUSCH minus the transmit power of the URLLC service.

In this embodiment of this application, the initial transmit power $\hat{P}_{\mathrm{eMBB},c}(i_2)$ of the eMBB service and the transmit power $\hat{P}_{\mathrm{urllc},c}(i_1)$ of the URLLC service are first calculated according to the formulas in the standard.

In the time period in which only the eMBB service is transmitted, the UE determines that the first power is equal to the initial transmit power of the eMBB service.

In the time period in which the eMBB service and the URLLC service are simultaneously transmitted, the second power needs to meet the following condition:

$$P_{eMBB,c}(i_2)=10\log_{10}\left(\hat{P}_{\mathrm{CMAX,f},c}(i)-\hat{P}_{\mathrm{urllc},c}(i_1)\right).$$

It can be learned that the second power is equal to the maximum power used by the UE to transmit the PUSCH minus the transmit power of the URLLC service.

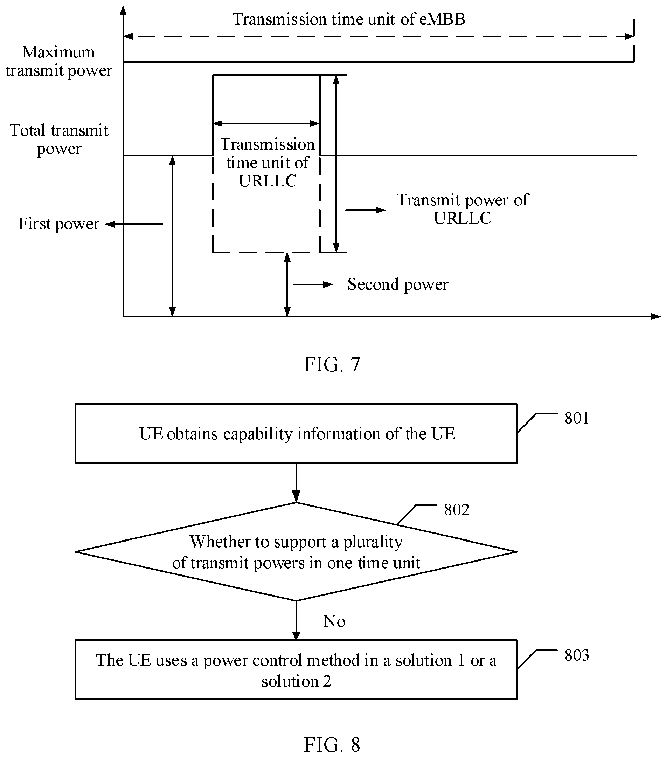

For ease of understanding, referring to FIG. 7, a horizontal coordinate represents time, and a vertical coordinate represents a power. For example, two types of PUSCHs are respectively an eMBB service and a URLLC service. A transmission time unit of the eMBB service needs to be greater than a transmission time unit of the URLLC service. No URLLC service is transmitted at the beginning of the transmission time unit of the eMBB service. In this case, a total transmit power of the UE is the first power, and the first power is equal to the initial transmit power of the eMBB service. Subsequently, when the URLLC service is simultaneously transmitted in the transmission time unit of the eMBB service, a total transmit power of the UE is equal to the second power plus the transmit power of the URLLC service. To ensure that in this case, the total transmit power of the UE does not exceed the maximum power used by the UE to transmit the PUSCH, the UE reduces the first power used to transmit the eMBB service to the second power. This power control method is applicable to UE that supports a jump in a transmit power in one transmission time unit. To be specific, it may not be ensured that the total transmit power of the UE remains constant in the transmission time unit of the eMBB service, only a transmit power of the eMBB service needs to be adjusted in the time period in which the eMBB service and the URLLC service are simultaneously transmitted, that is, the second power is determined, and the initial transmit power of the eMBB service is still maintained in the time period in which only the eMBB service is transmitted, so that a quantity of times of performing power control on the eMBB service by the UE in the transmission time unit of the eMBB service is reduced, and energy consumption is reduced.

The foregoing describes specific implementations of the power control method in the embodiments of this application. In addition, based on the foregoing power control method, in the embodiments of this application, the foregoing corresponding power control method may be further selected based on capability information of the UE. It should be noted that there may specifically be a plurality of implementations in the embodiments of this application, which are separately described below.

1. The UE selects a corresponding power control method based on capability information of the UE.

Referring to FIG. 8, another embodiment of the power control method in the embodiments of this application includes the following steps.

801: UE obtains capability information of the UE.

In this embodiment of this application, the UE may obtain the capability information of the UE, and the capability information is used to indicate whether the UE supports a plurality of transmit powers in one transmission time unit. To be specific, it can be learned based on the capability information that the UE whether the UE allows a jump in a transmit power of the UE to exceed a specific amplitude in the transmission time unit.

802: The UE determines whether the UE supports the plurality of transmit powers in the transmission time unit. If the UE determines that the UE does not support the plurality of transmit powers in the transmission time unit, step 803 is performed.

In this embodiment of this application, after obtaining the capability information of the UE, the UE may determine, based on the capability information, whether the UE supports the plurality of transmit powers in the transmission time unit.

803: The UE uses a power control method in the solution 1 or the solution 2.

In this embodiment of this application, when the UE determines that the UE does not support the plurality of transmit powers in the transmission time unit, the UE may select to use the power control method in the solution 1 or the solution 2 in the foregoing power control methods. It may be understood that the UE cannot allow the jump in the transmit power of the UE to exceed the specific amplitude in the transmission time unit. Therefore, there is a need to ensure that a total transmit power of the UE remains in a relatively constant range in the transmission time unit. It can be learned from the foregoing provided three power control methods in the solution 1, the solution 2, and the solution 3 that the UE needs to use the power control method in the solution 1 or the solution 2.

It should be noted that, if the UE determines that the UE supports the plurality of transmit powers in the transmission time unit, the UE may select any one of the three power control methods in the foregoing solution 1, solution 2, and solution 3. Selection of a specific power control method is not limited herein.

2. The UE reports capability information of the UE to a network device, and the network device indicates, based on the capability information, the UE to select a corresponding power control method.

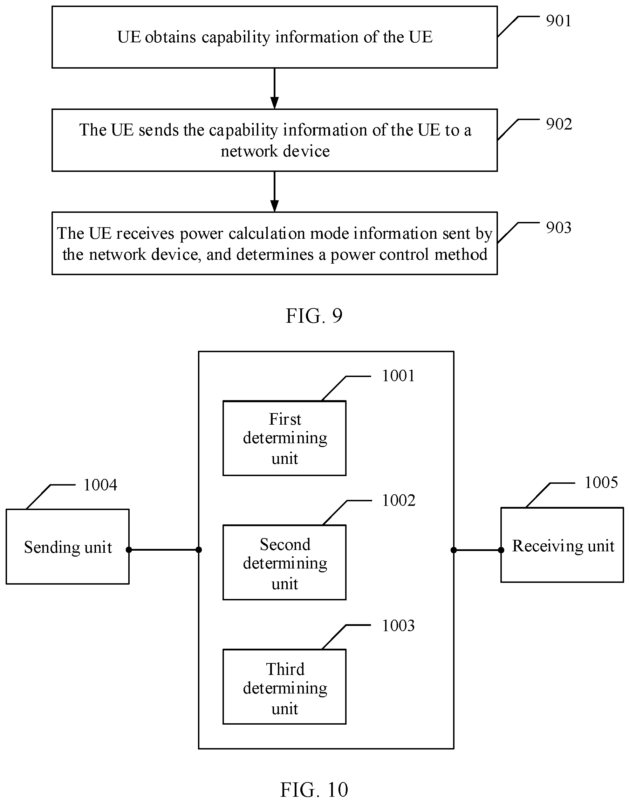

Referring to FIG. 9, another embodiment of the power control method in the embodiments of this application includes the following steps.

901: UE obtains capability information of the UE.

In this embodiment of this application, step 901 is similar to step 801 in the embodiment shown in FIG. 8. Details are not described herein again.

902: The UE sends the capability information of the UE to a network device.

In this embodiment of this application, after obtaining the capability information of the UE, the UE reports the capability information to the network device.

903: The UE receives power calculation mode information sent by the network device, and determines a power control method.

In this embodiment of this application, after the network device receives the capability information of the UE reported by the UE, the network device may generate the power calculation mode information and feed back the power calculation mode information to the UE. In other words, the network device notifies, by using the power calculation mode information, the UE of a specific power control method to be used. For example, if the network device determines, based on the capability information of the UE, that the UE does not support a plurality of transmit powers in one transmission time unit, the network device may notify, by using the power calculation mode information, the UE to use a power control method in the foregoing solution 1 or solution 2. If the network device determines, based on the capability information of the UE, that the UE supports a plurality of transmit powers in one transmission time unit, the network device may notify, by using the power calculation mode information, the UE to use any power control method in the foregoing solution 1, solution 2, or solution 3. Use of a specific power control method is not limited herein.

In this embodiment of this application, the UE may determine the corresponding power control method based on the capability information of the UE, thereby improving flexibility of the solution.

The foregoing describes the power control method in the embodiments of this application. The following describes UE in the embodiments of this application.

Referring to FIG. 10, an embodiment of the UE in the embodiments of this application includes:

a first determining unit 1001, configured to determine an initial transmit power of a first-type physical uplink shared channel PUSCH;

a second determining unit 1002, configured to: when a second-type PUSCH needs to be transmitted in a transmission time unit of the first-type PUSCH, determine that an actual transmit power of the first-type PUSCH in a time period in which the second-type PUSCH is not transmitted and that is in the transmission time unit of the first-type PUSCH is a first power, where the length of the transmission time unit of the first-type PUSCH is greater than the length of a transmission time unit of the second-type PUSCH, and the first power is greater than or equal to the initial transmit power and less than or equal to a maximum power used by the UE to transmit a PUSCH; and

a third determining unit 1003, configured to: when the second-type PUSCH needs to be transmitted in the transmission time unit of the first-type PUSCH, determine that an actual transmit power of the first-type PUSCH in a time period that is used to transmit the second-type PUSCH and that is in the transmission time unit of the first-type PUSCH is a second power, where the second power is greater than or equal to 0, and a sum of the second power and a transmit power that is of the second-type PUSCH is less than or equal to the maximum power used by the UE to transmit the PUSCH.

Optionally, the second determining unit 1002 may perform the step of determining the first power in the power control methods in the foregoing solution 1, solution 2, and solution 3. Details are not described herein again.

Optionally, the third determining unit 1003 may perform the step of determining the second power in the power control methods in the foregoing solution 1, solution 2, and solution 3. Details are not described herein again.

Optionally, the UE may further include:

a sending unit 1004, configured to send capability information of the UE to a network device, where the capability information is used to indicate whether the UE supports a plurality of transmit powers in a same transmission time unit; and

a receiving unit 1005, configured to receive power calculation mode information sent by the network device, where the power calculation mode information is used to determine a method for determining the first power and the second power.

In this embodiment of this application, the first determining unit 1001 determines the initial transmit power of the first-type PUSCH. When the second-type PUSCH needs to be transmitted in the transmission time unit of the first-type PUSCH, the second determining unit 1002 determines that the actual transmit power of the first-type PUSCH in the time period in which the second-type PUSCH is not transmitted and that is in the transmission time unit of the first-type PUSCH is the first power, where the length of the transmission time unit of the first-type PUSCH is greater than the length of the transmission time unit of the second-type PUSCH, and the first power is greater than or equal to the initial transmit power and less than or equal to the maximum power used by the UE to transmit the PUSCH. When the second-type PUSCH needs to be transmitted in the transmission time unit of the first-type PUSCH, the third determining unit 1003 determines that the actual transmit power of the first-type PUSCH in the time period that is used to transmit the second-type PUSCH and that is in the transmission time unit of the first-type PUSCH is the second power, where the second power is greater than or equal to 0, and the sum of the second power and the transmit power that is of the second-type PUSCH is less than or equal to the maximum power used by the UE to transmit the PUSCH. It can be learned that in the transmission time unit of the first-type PUSCH, regardless of the time period in which only the first-type PUSCH is transmitted or the time period in which the first-type PUSCH and the second-type PUSCH are simultaneously transmitted, a total transmit power of the UE does not exceed the maximum power used by the UE to transmit the PUSCH, so that a receive end can normally receive a signal. In addition, the sending unit 1004 may send the capability information of the UE to the network device, where the capability information is used to indicate whether the UE supports the plurality of transmit powers in the same transmission time unit. Then, the receiving unit 1005 may receive the power calculation mode information sent by the network device, where the power calculation mode information is used to determine the method for determining the first power and the second power. The UE may determine a corresponding power control method based on the capability information of the UE, thereby improving flexibility of the solutions.

The foregoing describes the UE in the embodiments of this application from a perspective of a modular function entity. The following describes the UE in the embodiments of this application from a perspective of hardware processing.

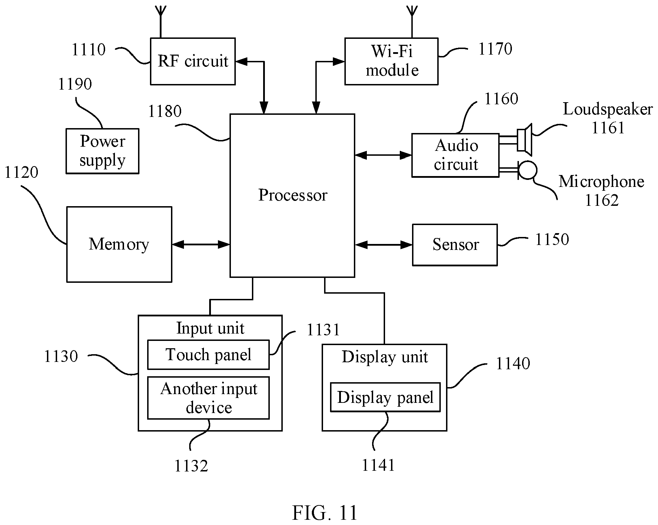

As shown in FIG. 11, an embodiment of this application further provides UE. For ease of description, only a part related to this embodiment of this application is described. For specific technical details that are not disclosed, refer to the method part in the embodiments of this application. The UE may be any terminal device including a mobile phone, a tablet computer, a personal digital assistant (personal digital assistant, PDA), a point of sales (point of sales, POS), a vehicle-mounted computer, or the like. For example, the UE is a mobile phone.

FIG. 11 is a block diagram of a partial structure of a mobile phone related to UE according to an embodiment of this application. Referring to FIG. 11, the mobile phone includes components such as a radio frequency (radio frequency, RF) circuit 1110, a memory 1120, an input unit 1130, a display unit 1140, a sensor 1150, an audio circuit 1160, a wireless fidelity (wireless fidelity, WiFi) module 1170, a processor 1180, and a power supply 1190. Persons skilled in the art may understand that a structure of a mobile phone shown in FIG. 11 constitutes no limitation on the mobile phone, and the mobile phone may include more or fewer components than those shown in the figure, may combine some components, or may have a different component arrangement.

The following describes each constituent component of the mobile phone in detail with reference to FIG. 11.

The RF circuit 1110 may be configured to send and receive signals in an information sending and receiving process or a call process. Particularly, the RF circuit 1110 receives downlink information from a base station, then delivers the downlink information to the processor 1180 for processing. In addition, the RF circuit 1110 sends related uplink data to the base station. The RF circuit 1110 usually includes but is not limited to an antenna, at least one amplifier, a transceiver, a coupler, a low noise amplifier (low noise amplifier, LNA), a duplexer, and the like. In addition, the RF circuit 1110 may further communicate with a network and another device through wireless communication. Any communications standard or protocol may be used for the wireless communication, and includes but is not limited to a global system for mobile communications (global system of mobile communication, GSM), a general packet radio service (general packet radio service, GPRS) system, a code division multiple access (code division multiple access, CDMA) system, a wideband code division multiple access (wideband code division multiple access, WCDMA) system, a long term evolution (long term evolution, LTE) system, an email, a short message service (short messaging service, SMS), and the like.

The memory 1120 may be configured to store a software program and a module. The processor 1180 executes various function applications of the mobile phone and data processing by running the software program and the module that are stored in the memory 1120. The memory 1120 may mainly include a program storage area and a data storage area. The program storage area may store an operating system, an application required by at least one function (such as a voice playback function and an image playback function), and the like. The data storage area may store data (such as audio data and a phone book) that is created based on use of the mobile phone, and the like. In addition, the memory 1120 may include a high speed random access memory, and may further include a nonvolatile memory such as at least one magnetic disk storage device, a flash memory, or another volatile solid-state storage device.

The input unit 1130 may be configured to: receive entered digit or character information, and generate a key signal input related to a user setting and function control of the mobile phone. Specifically, the input unit 1130 may include a touch panel 1131 and another input device 1132. The touch panel 1131, also referred to as a touchscreen, may collect a touch operation (for example, an operation performed by a user on or near the touch panel 1131 by using any proper object or accessory such as a finger or a stylus) performed by the user on or near the touch panel 1131, and may drive a corresponding connection apparatus based on a preset program. Optionally, the touch panel 1131 may include two parts: a touch detection apparatus and a touch controller. The touch detection apparatus detects a touch direction and position of the user, detects a signal brought by the touch operation, and transmits the signal to the touch controller. The touch controller receives touch information from the touch detection apparatus, converts the touch information into touch point coordinates, then sends the touch point coordinates to the processor 1180, and receives and executes a command sent by the processor 1180. In addition, the touch panel 1131 may be implemented in a plurality of types, such as a resistive type, a capacitive type, an infrared type, and a surface acoustic wave type. The input unit 1130 may further include the another input device 1132 in addition to the touch panel 1131. Specifically, the another input device 1132 may include but not limited to one or more of a physical keyboard, a function key (such as a volume control key or a power on/off key), a trackball, a mouse, a joystick, and the like.

The display unit 1140 may be configured to display information entered by the user or information provided for the user, and various menus of the mobile phone. The display screen 1140 may include a display panel 1141. Optionally, the display panel 1141 may be configured in a form of a liquid crystal display (liquid crystal display, LCD), an organic light-emitting diode (organic light-emitting diode, OLED), or the like. Further, the touch panel 1131 may cover the display panel 1141. After detecting a touch operation on or near the touch panel 1131, the touch panel 1131 transmits the touch operation to the processor 1180 to determine a type of a touch event, and then the processor 1180 provides a corresponding visual output on the display panel 1141 based on the type of the touch event. Although the touch panel 1131 and the display panel 1141 are used as two independent parts in FIG. 11 to implement input and input functions of the mobile phone, in some embodiments, the touch panel 1131 and the display panel 1141 may be integrated to implement the input and output functions of the mobile phone.

The mobile phone may further include at least one sensor 1150, such as an optic sensor, a movement sensor, and another sensor. Specifically, the optic sensor may include an ambient light sensor and a proximity sensor. The ambient light sensor may adjust luminance of the display panel 1141 based on brightness of ambient light. The proximity sensor may turn off the display panel 1141 and/or backlight when the mobile phone approaches an ear. As a type of movement sensor, an accelerometer sensor may detect a value of acceleration in each direction (usually on three axes), may detect a value and a direction of gravity in a stationary state, and may be used in an application for identifying a mobile phone posture (such as screen switching between a landscape mode and a portrait mode, a related game, or magnetometer posture calibration), a function related to vibration identification (such as a pedometer or a knock), or the like. Other sensors such as a gyroscope, a barometer, a hygrometer, a thermometer, or an infrared sensor may be further configured in the mobile phone. Details are not described herein.

The audio frequency circuit 1160, a loudspeaker 1161, and a microphone 1162 may provide an audio interface between the user and the mobile phone. The audio circuit 1160 may transmit, to the loudspeaker 1161, an electrical signal that is obtained after conversion of received audio data, and the loudspeaker 1161 converts the electrical signal into an acoustic signal and outputs the acoustic signal. In addition, the microphone 1162 converts a collected acoustic signal into an electrical signal, the audio circuit 1160 receives and converts the electrical signal into audio data, and outputs the audio data to the processor 1180 for processing, and then processed audio data is sent to, for example, another mobile phone, by using the RF circuit 1110, or the audio data is output to the memory 1120 for further processing.

Wi-Fi is a short-distance wireless transmission technology. With the Wi-Fi module 1170, the mobile phone may help the user send and receive an email, browse a web page, access streaming media, and the like. The Wi-Fi module 1170 provides wireless access to the broadband internet for the user. Although FIG. 11 shows the Wi-Fi module 1170, it may be understood that the Wi-Fi module 1170 is not a mandatory component of the mobile phone, and may be omitted based on a requirement without changing the essence of this application.

The processor 1180 is a control center of the mobile phone, connects various parts of the entire mobile phone by using various interfaces and lines, and executes various functions and processes data of the mobile phone by running or executing the software program and/or the module stored in the memory 1120 and invoking data stored in the memory 1120, to perform overall monitoring on the mobile phone. Optionally, the processor 1180 may include one or more processing units. Preferably, an application processor and a modem processor may be integrated into the processor 1180. The application processor mainly processes an operating system, a user interface, an application, and the like. The modem processor mainly processes wireless communication. It may be understood that the foregoing modem processor may not be integrated into the processor 1180.

The mobile phone further includes the power supply 1190 (such as a battery) supplying power to the components. Preferably, the power supply may be logically connected to the processor 1180 by using a power management system, to implement functions such as management of charging, discharging, and power consumption by using the power management system.

Although not shown, the mobile phone may further include a camera, a Bluetooth module, and the like. Details are not described herein.

In this embodiment of this application, the processor 1180 is specifically configured to perform all or some of the actions performed by the UE in the embodiment shown in FIG. 3, FIG. 8, or FIG. 9. Details are not described herein again.

In another possible design, when a chip in the UE implements the foregoing power control method, the chip includes a processing unit and a communications unit. The processing unit may be, for example, a processor. The communications unit may be, for example, an input/output interface, a pin, or a circuit. The processing unit may perform all or some of the actions performed by the UE in the embodiment shown in FIG. 3, FIG. 8, or FIG. 9.

The processor mentioned in any of the foregoing designs may be a general-purpose central processing unit (CPU), a microprocessor, an application-specific integrated circuit (application-specific integrated circuit, ASIC), or one or more integrated circuits configured to control program execution of the wireless communication method according to the first aspect.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communications connections may be implemented by using some interfaces. The indirect couplings or communications connections between the apparatuses or units may be implemented in electrical, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit. The foregoing integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (ROM, read-only memory), a random access memory (RAM, random access memory), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

**Claims**

1. A power control method, comprising:

   determining, by user equipment UE, an initial transmit power of a first-type physical uplink shared channel PUSCH;
   when a second-type PUSCH needs to be transmitted in a transmission time unit of the first-type PUSCH, determining, by the UE, that an actual transmit power of the first-type PUSCH in a time period in which the second-type PUSCH is not transmitted and that is in the transmission time unit of the first-type PUSCH is a first power, wherein a length of the transmission time unit of the first-type PUSCH is greater than a length of a transmission time unit of the second-type PUSCH, and the first power is greater than or equal to the initial transmit power and less than or equal to a maximum power used by the UE to transmit a PUSCH; and
   when the second-type PUSCH needs to be transmitted in the transmission time unit of the first-type PUSCH, determining, by the UE, that an actual transmit power of the first-type PUSCH in a time period that is used to transmit the second-type PUSCH and that is in the transmission time unit of the first-type PUSCH is a second power, wherein the second power is greater than or equal to 0, and a sum of the second power and a transmit power that is of the second-type PUSCH is less than or equal to the maximum power used by the UE to transmit the PUSCH.

2. The method according to claim 1, wherein the first power is equal to the sum of the second power and the transmit power that is of the second-type PUSCH.

3. The method according to claim 1, wherein a difference between the first power and the sum of the second power and the transmit power that is of the second-type PUSCH is less than or equal to a preset difference.

4. The method according to claim 3, wherein the preset difference is a maximum value, supported by the UE, of a difference between any two non-zero transmit powers in a same transmission time unit.

5. The method according to claim 1, wherein the first power is equal to the initial transmit power.

6. The method according to claim 1, wherein the first power is greater than or equal to the transmit power of the second-type PUSCH.

7. The method according to any one of claims 1 to 6, wherein the first power is equal to the initial transmit power multiplied by a first coefficient, and the second power is equal to the initial transmit power multiplied by a second coefficient.

8. The method according to any one of claims 1 to 6, wherein the method further comprises: sending, by the UE, capability information of the UE to a network device, wherein the capability information is used to indicate whether the UE supports a plurality of transmit powers in the same transmission time unit.

9. The method according to claim 8, wherein after the sending, by UE, capability information of the UE to a network device, the method further comprises: receiving, by the UE, power calculation mode information sent by the network device, wherein the power calculation mode information is used to determine a method for determining the first power and the second power.

10. User equipment UE, comprising:

a first determining unit, configured to determine an initial transmit power of a first-type physical uplink shared channel PUSCH;
a second determining unit, configured to: when a second-type PUSCH needs to be transmitted in a transmission time unit of the first-type PUSCH, determine that an actual transmit power of the first-type PUSCH in a time period in which the second-type PUSCH is not transmitted and that is in the transmission time unit of the first-type PUSCH is a first power, wherein a length of the transmission time unit of the first-type PUSCH is greater than a length of a transmission time unit of the second-type PUSCH, and the first power is greater than or equal to the initial transmit power and less than or equal to a maximum power used by the UE to transmit a PUSCH; and
a third determining unit, configured to: when the second-type PUSCH needs to be transmitted in the transmission time unit of the first-type PUSCH, determine that an actual transmit power of the first-type PUSCH in a time period that is used to transmit the second-type PUSCH and that is in the transmission time unit of the first-type PUSCH is a second power, wherein the second power is greater than or equal to 0, and a sum of the second power and a transmit power that is of the second-type PUSCH is less than or equal to the maximum power used by the UE to transmit the PUSCH.

11. The UE according to claim 10, wherein the first power is equal to the sum of the second power and the transmit power that is of the second-type PUSCH.

12. The UE according to claim 10, wherein a difference between the first power and the sum of the second power and the transmit power that is of the second-type PUSCH is less than or equal to a preset difference.

13. The UE according to claim 12, wherein the preset difference is a maximum value, supported by the UE, of a difference between any two non-zero transmit powers in a same transmission time unit.

14. The UE according to claim 10, wherein the first power is equal to the initial transmit power.

15. The UE according to claim 10, wherein the first power is equal to the transmit power of the second-type PUSCH.

16. The UE according to claims 10 to 15, wherein the first power is equal to the initial transmit power multiplied by a first coefficient, and the second power is equal to the initial transmit power multiplied by a second coefficient.

17. The UE according to claims 10 to 15, wherein the UE further comprises:
a sending unit, configured to send capability information of the UE to a network device, wherein the capability information is used to indicate whether the UE supports a plurality of transmit powers in the same transmission time unit.

18. The UE according to claim 17, wherein the UE further comprises:
a receiving unit, configured to receive power calculation mode information sent by the network device, wherein the power calculation mode information is used to determine a method for determining the first power and the second power.

19. A computer-readable storage medium, comprising an instruction, wherein when the instruction is run on a computer, the computer is enabled to perform the method according to any one of claims 1 to 9.

**20.** A computer program product that comprises an instruction, wherein when the computer program product is run on a computer, the computer is enabled to perform the method according to any one of claims 1 to 9.

**21.** A chip, wherein the chip is configured to support user equipment UE in implementing a function according to any one of claims 1 to 9.

Access network
device

Terminal
device

Terminal
device

FIG. 1

Maximum
transmit
power

Total
transmit
power

Transmission
time unit of
URLLC

Transmission
time unit of
URLLC

Transmission
time unit of eMBB

FIG. 2

UE determines an initial transmit power of an eMBB service — 301

The UE determines that an actual transmit power of the eMBB service in a time period in which a URLLC service is not transmitted and that is in a transmission time unit of the eMBB service is a first power — 302

The UE determines that an actual transmit power of the eMBB service in a time period that is used to transmit the URLLC service and that is in the transmission time unit of the eMBB service is a second power — 303

FIG. 3

Maximum transmit power

Transmission time unit of eMBB

Total transmit power

Second power

First power

Transmission time unit of URLLC

Transmit power of URLLC

FIG. 4

Maximum
transmit power

Transmission time unit of eMBB

Preset difference

Total transmit
power

Second power

First power

Transmission
time unit of
URLLC

Transmit power of URLLC

FIG. 5

Maximum
transmit power

Transmission time unit of eMBB

Preset
difference

Total transmit
power

Transmit power of
URLLC

First power

Transmission
time unit of
URLLC

FIG. 6

FIG. 7

FIG. 8

UE obtains capability information of the UE — 901

The UE sends the capability information of the UE to a network device — 902

The UE receives power calculation mode information sent by the network device, and determines a power control method — 903

FIG. 9

First determining unit — 1001

Second determining unit — 1002

Third determining unit — 1003

Sending unit — 1004

Receiving unit — 1005

FIG. 10

1110 ⌒ RF circuit

1190

1180

1120

Power
supply

Memory

Processor

Wi-Fi
module ⌒ 1170

1160

Audio
circuit

Loudspeaker
1161

Microphone
1162

Sensor ⌒ 1150

Input unit
Touch panel ⌒ 1131

Another input
device

1130 ⌒

Display unit
Display panel

⌒ 1140

1132

1141

FIG. 11

## INTERNATIONAL SEARCH REPORT

| | International application No. |
|---|---|
| | **PCT/CN2019/073325** |

| A. | CLASSIFICATION OF SUBJECT MATTER |
|---|---|
| | H04W 52/36(2009.01)i |

According to International Patent Classification (IPC) or to both national classification and IPC

| B. | FIELDS SEARCHED |
|---|---|

Minimum documentation searched (classification system followed by classification symbols)

H04W, H04L

Documentation searched other than minimum documentation to the extent that such documents are included in the fields searched

Electronic data base consulted during the international search (name of data base and, where practicable, search terms used)

CNABS, CNKI, CNTXT, VEN, 3GPP: transmit, transmitted, transmision, power, PUSCH, physical uplink shared channel, threshold, over, larger, than, o, zero, reduce

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | CN 101877906 A (ZTE CORPORATION) 03 November 2010 (2010-11-03) description, paragraphs 0046-0176 and 0454-0455, and figures 2-6 | 1-21 |
| X | ALCATEL-LUCENT et al. "Power Scaling Method for Maximum Power" *3GPP TSG-RAN WG1 #61, R1-102784, Montreal, Canada,* 14 May 2010 (2010-05-14), pp. 1-5 | 1-21 |
| A | CN 104936300 A (ZTE CORPORATION) 23 September 2015 (2015-09-23) entire document | 1-21 |
| A | CN 102300305 A (CHINA ACADEMY OF TELECOMMUNICATIONS TECHNOLOGY) 28 December 2011 (2011-12-28) entire document | 1-21 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 April 2019** | **18 April 2019** |

| Name and mailing address of the ISA/CN | Authorized officer |
|---|---|
| **State Intellectual Property Office of the P. R. China No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

<table>
<tr><td colspan="2" align="center"><b>INTERNATIONAL SEARCH REPORT</b><br><i>Information on patent family members</i></td><td colspan="2">International application No.<br><br><b>PCT/CN2019/073325</b></td></tr>
</table>

| Patent document cited in search report | | | Publication date (day/month/year) | Patent family member(s) | | | Publication date (day/month/year) |
|---|---|---|---|---|---|---|---|
| CN | 101877906 | A | 03 November 2010 | CN | 101877906 | B | 12 August 2015 |
|    |            |   |                  | WO | 2011144011 | A1 | 24 November 2011 |
| CN | 104936300 | A | 23 September 2015 | US | 2017303289 | A1 | 19 October 2017 |
|    |            |   |                  | WO | 2015139460 | A1 | 24 September 2015 |
| CN | 102300305 | A | 28 December 2011 | WO | 2013040954 | A1 | 28 March 2013 |
|    |            |   |                  | CN | 102300305 | B | 04 September 2013 |

Form PCT/ISA/210 (patent family annex) (January 2015)

## REFERENCES CITED IN THE DESCRIPTION

**Patent documents cited in the description**

- CN 201810103897